# FASCICULE DE BREVET EUROPEEN

(11) **EP 3 418 192 B1**
(45) Date de publication et mention de la délivrance du brevet: **18.12.2019**
(21) Numéro de dépôt: 18167456.5
(22) Date de dépôt: 16.04.2018
(51) Int. Cl.: B64C 27/14, F16H 57/04

(54) **SYSTEME DE RECUPERATION D'ENERGIE THERMIQUE D'UNE BOITE DE TRANSMISSION PRINCIPALE DE PUISSANCE D'UN AERONEF POUR LE CHAUFFAGE DE L'HABITACLE DE L'AERONEF**
SYSTEM ZUR RÜCKGEWINNUNG VON WÄRMEENERGIE EINES HAUPTLEISTUNGSÜBERTRAGUNGSGETRIEBES EINES LUFTFAHRZEUGS ZUR BEHEIZUNG DER KABINE DES LUFTFAHRZEUGS
SYSTEM FOR RECOVERING THERMAL ENERGY FROM A MAIN POWER-TRANSMISSION GEARBOX OF AN AIRCRAFT FOR HEATING THE PASSENGER COMPARTMENT OF THE AIRCRAFT

(30) Priorité: 23.06.2017 FR 1770669
(43) Date de publication de la demande: 26.12.2018
(73) Titulaire: Airbus Helicopters, 13725 Marignane Cedex (FR)
(72) Inventeur: GENEIX, Jérôme, 13140 Miramas (FR); BARAIS, Olivier, 13820 Ensues la Redonne (FR); BEZIA, Arnaud, 13300 Salon de Provence (FR)
(74) Mandataire: GPI & Associés

(56) Documents cités:
- EP-A1- 3 015 743
- EP-A2- 1 319 815
- DE-A1-102015 113 485
- US-A- 3 752 222
- US-A1- 2012 168 118

## Description

La présente invention se rapporte au domaine des systèmes de chauffage d'un habitacle d'un véhicule. L'invention est particulièrement destinée au chauffage de l'habitacle d'un aéronef.

La présente invention concerne un système de récupération d'énergie thermique d'un dispositif de lubrification d'une boîte de transmission principale de puissance d'un aéronef pour le chauffage de son habitacle. Ce système de récupération d'énergie thermique est particulièrement adapté au chauffage de l'habitacle d'un aéronef.

Il est connu pour chauffer l'habitacle d'un véhicule de récupérer et d'utiliser une partie de la chaleur générée par au moins un moteur thermique de ce véhicule.

Dans le cas des automobiles, par exemple, les moteurs thermiques utilisés aujourd'hui sont majoritairement à refroidissement liquide. La chaleur transmise par le moteur thermique à ce liquide de refroidissement peut alors être utilisée au travers d'un échangeur thermique pour réchauffer l'air introduit dans l'habitacle de ce véhicule.

Par contre, cette technique est rarement utilisée en aéronautique, les aéronefs étant souvent motorisés par des turbomachines ne possédant pas de système de refroidissement de la turbomachine utilisable pour le chauffage de l'habitacle. Ces turbomachines disposent d'un dispositif de refroidissement de leur huile moteur par un échange thermique avec un circuit dans lequel circule du carburant, mais les niveaux des puissances calorifiques à dissiper sont trop faibles pour permettre de chauffer l'habitacle de l'aéronef. De fait, d'autres techniques de chauffage de l'habitacle sont mises en œuvre pour les aéronefs.

Pour les aéronefs dont l'habitacle est pressurisé, principalement dans le cas des avions volant à haute altitude, la différence de pression entre l'air extérieur et l'air intérieur est utilisée pour générer une circulation d'air. Par exemple, comme décrit dans le document US 4262495, une turbine est animée par cette différence de pression entre l'air extérieur et l'air intérieur à l'aéronef et permet la circulation de l'air dans l'aéronef. Cet air peut alors être réchauffé ou refroidi pour assurer la régulation de la température de l'habitacle d'un tel aéronef.

Une telle solution n'est pas applicable aux aéronefs dont l'habitacle n'est pas pressurisé, ce qui concerne la majorité des aéronefs à voilure tournante. Dans ce cas, une partie de l'air comprimé sortant d'un compresseur et destiné à l'alimentation de la chambre de combustion d'un moteur thermique de l'aéronef, et plus particulièrement d'un turbomoteur, peut être utilisée.

En effet, cet air comprimé a une température élevée, généralement de l'ordre de 250 à 350 degrés Celsius (250 à 350°C) en aval d'un compresseur. Une partie de cet air comprimé est alors prélevée et mélangée avec de l'air extérieur afin de chauffer l'habitacle de l'aéronef. De plus, l'utilisation de cet air comprimé sortant du compresseur assure également une excellente circulation dans l'habitacle de l'aéronef du mélange d'air réchauffé.

Cette technique de chauffage est la plus utilisée actuellement sur les aéronefs à voilure tournante, mais présente cependant plusieurs inconvénients.

Tout d'abord, cette technique de chauffage est reconnue comme étant une source de bruit pour l'habitacle de l'aéronef, ce bruit étant principalement dû au sifflement engendré par la détente de l'air comprimé lors de son introduction dans l'habitacle de l'aéronef. Des solutions visant à réduire ce bruit ont toutefois été développées, avec une efficacité relative.

Par exemple, le document US 6139423 décrit un système de chauffage par prélèvement d'air chaud en aval du compresseur d'un turbomoteur. Ce système de chauffage est muni de dispositifs d'absorption acoustique formés d'une part par les parois internes d'un conduit de mélange de l'air ambiant avec l'air chaud ainsi que par un noyau positionné dans ce conduit. Ces dispositifs d'absorption acoustique visent à limiter les turbulences du flux d'air dans ce conduit et à absorber les bruits qu'il génère.

Par ailleurs, l'air comprimé sort du compresseur à haute température, de l'ordre de 250 à 350°C, et circule généralement dans des canalisations le long du fuselage de l'aéronef. Dès lors, toute rupture ou fuite sur une de ces canalisations peut avoir des conséquences graves. De fait, ces canalisations sont sécurisées avec une implantation généralement complexe dans l'aéronef afin que la sécurité à bord de l'aéronef soit préservée en cas de fuite.

Enfin, ce prélèvement d'air comprimé en sortie du compresseur d'un moteur thermique génère une perte de rendement de ce moteur thermique et, par suite, une baisse de sa puissance disponible ainsi qu'une augmentation de sa consommation de carburant.

D'autres techniques de chauffage alternatives ont été développées pour tenter de limiter les effets de ces inconvénients, en utilisant par exemple les gaz d'échappement du moteur thermique qui sont évacués à très haute température, de l'ordre de 700°C, et peuvent donc être utilisés en tant que source de chaleur.

Notamment, le document US 2341549 décrit un système de chauffage de l'habitacle d'un véhicule comportant une première conduite dans laquelle circule l'air de l'habitacle et agencée dans une conduite intermédiaire dans laquelle circule un fluide. La conduite intermédiaire traverse la conduite d'échappement du moteur thermique du véhicule. De fait, les gaz d'échappement réchauffent le fluide se trouvant dans la conduite intermédiaire qui chauffe alors l'air circulant dans la première conduite et destiné à chauffer l'habitacle du véhicule.

En outre, on connaît le document US 4490989 qui divulgue un système de chauffage et de climatisation de l'habitacle d'un hélicoptère. Le chauffage de l'habitacle est assuré par l'air circulant dans une conduite traversant une chambre de réchauffage d'air positionnée au niveau du moteur thermique de l'aéronef et entourant une partie des conduites d'échappement de ce moteur.

Par contre, ces techniques de chauffage alternatives présentent également des inconvénients. Par exemple, ces systèmes de chauffage utilisent un échangeur thermique pour réchauffer l'air injecté dans l'habitacle avec les gaz d'échappement. Cet échangeur thermique a une masse et un volume généralement non négligeables qui peuvent alors dégrader les performances de l'aéronef.

De plus, les gaz d'échappement sortent de la chambre de combustion du moteur thermique à grande vitesse. Leur circulation est alors perturbée par cet échangeur thermique et génère des pertes de charge importantes sur les gaz d'échappement entraînant là encore une perte de puissance du moteur thermique.

L'art antérieur comporte également les documents DE 10 2015 113485 et EP 1319815 décrivant un système de lubrification et de refroidissement d'un moteur thermique comportant plusieurs échangeurs et utilisant au moins deux fluides distincts ainsi que le document US 2012/0168118 décrivant un dispositif d'échange de chaleur pour un véhicule thermique utilisant plusieurs échangeurs thermiques afin d'une part de refroidir un liquide de refroidissement d'un moteur thermique et d'autre part pour réchauffer un autre fluide du véhicule.

On connaît également le document EP 3015743 qui décrit un dispositif de lubrification d'une boîte de transmission principale de puissance d'un aéronef à triple circuits, à savoir deux circuits de lubrification et un circuit tertiaire dans lequel circule un liquide caloporteur. Chaque circuit comporte au moins un échangeur thermique, un de ces échangeurs thermiques permettant un échange thermique entre le liquide de lubrification et le liquide caloporteur circulant dans le circuit tertiaire afin de refroidir le liquide de lubrification.

Enfin, le document US 3752222 décrit un système de refroidissement de l'huile de transmission d'un moteur comportant un système de dérivation en fonction de la température de l'huile de transmission.

La présente invention vise alors à proposer une solution de chauffage de l'habitacle d'un véhicule, et d'un aéronef en particulier, permettant de s'affranchir des limitations mentionnées ci-dessus, en utilisant de l'énergie thermique disponible et non utilisée, et alors sans dégradation des performances du ou des moteurs thermiques de ce véhicule.

Dans ce but, la présente invention a pour objet un système de récupération d'énergie thermique d'un dispositif de lubrification d'un système mécanique d'un véhicule et une architecture de récupération d'énergie thermique d'un tel dispositif de lubrification pour le chauffage de l'habitacle du véhicule. La présente invention a aussi pour objet un procédé de récupération d'énergie thermique d'un tel dispositif de lubrification.

Selon l'invention, un système de récupération d'énergie thermique d'un dispositif de lubrification d'un système mécanique d'un véhicule comporte un dispositif de lubrification muni d'au moins un réservoir contenant un liquide de lubrification et d'au moins un circuit de lubrification, dans lequel circule le liquide de lubrification et destiné à une lubrification de ce système mécanique du véhicule.

Un système mécanique comporte généralement des éléments tournants, tels que des arbres en rotation sur des paliers et des roulements, ainsi que des éléments de transmission de puissance et de réduction ou d'augmentation de vitesse, tels que des pignons et/ou des engrenages. Le système mécanique permet par exemple la transmission d'une puissance mécanique d'une installation motrice du véhicule vers un moyen de propulsion du véhicule. Le réservoir du dispositif de lubrification est fréquemment constitué par un carter de ce système mécanique.

Il est alors essentiel pour le bon fonctionnement du système mécanique et, par suite, du véhicule de lubrifier et de refroidir les éléments tournants et les éléments de transmission de puissance du système mécanique par un liquide de lubrification, par exemple de l'huile. Cette lubrification a pour fonctions principales de limiter l'usure et l'échauffement de ces éléments du système mécanique et, par suite, de prolonger la durée de vie du système mécanique. Sans une telle lubrification, le fonctionnement du système mécanique peut être rapidement dégradé, voire impossible.

Cette lubrification est assurée par le dispositif de lubrification par l'intermédiaire d'un ou de plusieurs circuits de lubrification acheminant le liquide de lubrification jusqu'aux éléments tournants. Suite à cette lubrification du système mécanique, le liquide de lubrification se réchauffe et est généralement refroidi dans un dispositif de refroidissement avant d'être de nouveau utilisable pour une lubrification efficace du système mécanique.

Le système de récupération d'énergie thermique selon l'invention est remarquable en ce qu'il comporte un circuit de récupération d'énergie thermique dans lequel circule un fluide caloporteur, le circuit de récupération d'énergie thermique étant muni :
- d'un premier générateur de débit du fluide caloporteur,
- d'au moins un premier échangeur thermique relié à un des circuits de lubrification et permettant un échange thermique entre le fluide caloporteur et le liquide de lubrification circulant dans le dispositif de lubrification et
- des conduites dans lesquelles circule le fluide caloporteur.

Le fluide caloporteur du circuit de récupération d'énergie thermique est ainsi chauffé par la chaleur émise par le liquide de lubrification par l'intermédiaire de chaque premier échangeur thermique, le liquide de lubrification ayant été lui-même chauffé lors de la lubrification du système mécanique. Le liquide de lubrification agit ainsi comme une source de chaleur disponible pour le fluide caloporteur.

De la sorte, le système de récupération d'énergie thermique selon l'invention permet de chauffer le fluide caloporteur avantageusement par récupération d'une énergie thermique disponible dégagée par le système mécanique et transmise au liquide de lubrification.

De plus, le système de récupération d'énergie thermique selon l'invention permet également de dissiper avantageusement une partie de cette énergie thermique dégagée par le système mécanique et transmise au liquide de lubrification et de participer ainsi à la régulation thermique du système mécanique par l'intermédiaire du liquide de lubrification.

Le circuit de récupération d'énergie thermique est relié à un dispositif de chauffage de l'habitacle du véhicule. Ce dispositif de chauffage comporte par exemple un ou plusieurs échangeurs thermiques en contact avec l'air de l'habitacle du véhicule.

Les conduites du circuit de récupération d'énergie thermique permettent d'acheminer le fluide caloporteur vers le dispositif de chauffage afin de chauffer l'air de l'habitacle. Le premier générateur de débit du circuit de récupération d'énergie thermique, constitué par exemple par une pompe, permet une circulation du fluide caloporteur dans le premier échangeur, dans les conduites et dans le dispositif de chauffage. Le circuit de récupération d'énergie thermique est généralement un circuit fermé.

Le circuit de récupération d'énergie thermique et le dispositif de chauffage forment ainsi un système de chauffage de l'habitacle.

Le système de récupération d'énergie thermique selon l'invention permet ainsi d'alimenter en fluide caloporteur chaud le dispositif de chauffage afin de chauffer l'habitacle du véhicule en utilisant avantageusement cette énergie thermique disponible dégagée par le système mécanique et récupérée par l'intermédiaire du liquide de lubrification. En conséquence, aucun prélèvement d'air chaud au niveau d'un compresseur ou bien d'un moteur thermique du véhicule n'est nécessaire.

Les nuisances sonores et les dégradations des performances du moteur thermique qui accompagnement un tel prélèvement d'air ont avantageusement disparues. En particulier, les performances du moteur thermique sont, grâce à l'invention, indépendantes du fonctionnement du système de chauffage de l'habitacle du véhicule. De même, la consommation en carburant de ce moteur thermique n'augmente pas lors du fonctionnement de ce système de chauffage de l'habitacle.

De plus, ce prélèvement d'air chaud étant maintenant inutile, l'installation dédiée à ce prélèvement d'air chaud et à sa distribution n'est pas nécessaire, ce qui permet un gain de masse non négligeable du véhicule.

Par ailleurs, la température du fluide caloporteur circulant dans le circuit de récupération d'énergie thermique est de l'ordre de 80 à 100°C et donc bien inférieure à la température de l'air comprimé sortant par exemple d'un compresseur. De fait, l'implantation et l'intégration de ces conduites dans le véhicule nécessitent moins de sécurisation et sont plus simples que celles des canalisations de l'air comprimé.

En conséquence, le gain total de masse, à savoir sur l'implantation des conduites dans lesquelles circule l'air chaud, sur l'installation d'un système dédié au prélèvement et à la distribution de cet air chaud ainsi que sur la consommation de carburant, peut être de l'ordre de plusieurs dizaines de kilogrammes.

En outre, en n'utilisant pas d'air chaud venant de l'installation motrice, à savoir d'un compresseur ou bien d'un moteur thermique pour chauffer l'habitacle, le système de récupération d'énergie thermique selon l'invention permet avantageusement d'isoler l'installation motrice de l'habitacle et, par suite, d'éviter des risques de pollution de l'air de l'habitacle et de propagation d'odeur en provenance de l'installation motrice.

De préférence, le circuit de récupération d'énergie thermique comporte un seul premier échangeur thermique agencé à l'intérieur du système mécanique. Selon cette implantation à l'intérieur du système mécanique, une fuite de liquide de lubrification au niveau du premier échangeur thermique provoque l'écoulement du liquide de lubrification dans le carter de ce système mécanique constituant généralement le réservoir du dispositif de lubrification évitant avantageusement toute perte de liquide de lubrification.

De plus, une différence de pression existe de préférence entre le circuit de récupération d'énergie thermique à l'intérieur du système mécanique et le circuit de lubrification, la pression du liquide de lubrification étant supérieure à la pression du fluide caloporteur. De la sorte, en cas de fuite au niveau de ce premier échangeur thermique, le liquide de lubrification pourra s'écouler dans le circuit de récupération d'énergie thermique à l'intérieur du système mécanique et non l'inverse afin de limiter le risque de pollution du liquide de lubrification par le fluide caloporteur.

Cependant, le premier échangeur thermique peut aussi être agencé à l'extérieur du système mécanique. Le circuit de récupération d'énergie thermique peut également comporter plusieurs premiers échangeurs thermiques afin par exemple d'optimiser leurs implantations dans l'espace disponible dans le véhicule, aussi bien à l'intérieur qu'à l'extérieur du système mécanique.

Par ailleurs, le dispositif de lubrification du système mécanique comporte un ou plusieurs circuits de lubrification. Ainsi, le dispositif de lubrification peut comporter au moins deux circuits de lubrification.

De préférence, au moins un circuit de lubrification comporte un dispositif de refroidissement destiné à refroidir le liquide de lubrification.

Un dispositif de refroidissement du liquide de lubrification comporte par exemple un deuxième échangeur thermique entre le liquide de lubrification et l'air ambiant. Ce dispositif de refroidissement du liquide de lubrification est de préférence agencé à l'extérieur du système mécanique afin d'optimiser la capacité de refroidissement du liquide de lubrification. De la sorte, le dispositif de refroidissement permet de réguler la température du système mécanique en refroidissant le liquide de lubrification.

Ces circuits de lubrification utilisent généralement un réservoir commun pour puiser le liquide de lubrification.

Cependant, un circuit de lubrification peut comporter un réservoir spécifique comme décrit dans le document EP2505878. Selon ce document, un circuit de lubrification de secours comporte un réservoir dédié, positionné au-dessus des organes essentiels à lubrifier. Le liquide de lubrification s'écoule alors par gravité depuis ce réservoir sur ces organes essentiels en cas de besoin.

Selon un mode de réalisation privilégié de l'invention, le dispositif de lubrification comporte deux circuits de lubrification, à savoir un circuit principal de lubrification et un circuit secondaire de lubrification, le circuit principal de lubrification comportant un dispositif de refroidissement destiné à refroidir le liquide de lubrification. Le circuit secondaire de lubrification peut également comporter un dispositif de refroidissement du liquide de lubrification.

Les deux circuits de lubrification peuvent fonctionner et lubrifier simultanément le système mécanique.

Le circuit secondaire de lubrification peut être un circuit de secours configuré afin de pallier une panne du circuit principal de lubrification, telle qu'une fuite par exemple. Dans ce cas, le circuit secondaire de lubrification fonctionne uniquement suite à une détection d'une panne du circuit principal de lubrification.

Chaque premier échangeur thermique du circuit de récupération d'énergie thermique peut utiliser le liquide de lubrification circulant dans le circuit principal de lubrification ou bien le circuit secondaire de lubrification.

Par ailleurs, le dispositif de lubrification peut comporter au moins un système de dérivation d'un dispositif de refroidissement, chaque système de dérivation étant muni d'un dispositif de dérivation, telle une vanne de dérivation, et d'une conduite de dérivation. Chaque système de dérivation utilise un capteur de température du dispositif de lubrification mesurant la température du liquide de lubrification.

Chaque système de dérivation est alors configuré afin que le liquide de lubrification ne circule pas dans le dispositif de refroidissement, mais circule dans la conduite de dérivation lorsque la température du liquide de lubrification est inférieure à une température de fonctionnement T1. Dans ce but, la conduite de dérivation est reliée aux conduites agencées en amont et en aval de ce dispositif de refroidissement. Le capteur de température est par exemple positionné dans le réservoir du liquide de lubrification dans lequel puise le circuit principal de lubrification.

De fait, tant que la température du liquide de lubrification est inférieure à la température de fonctionnement T1, le dispositif de dérivation permet la circulation du liquide de lubrification dans la conduite de dérivation, en court-circuitant le dispositif de refroidissement. Le liquide de lubrification n'est alors pas refroidi dans le dispositif de refroidissement et sa température augmente rapidement. Par suite, la température du fluide caloporteur augmente également rapidement par l'intermédiaire du premier échangeur thermique.

En court-circuitant le dispositif de refroidissement, chaque système de dérivation permet avantageusement d'accélérer l'échauffement du liquide de lubrification et d'obtenir rapidement une différence de température importante entre le fluide caloporteur et le liquide de lubrification. De la sorte, l'efficacité du premier échangeur thermique est maximisée et, par conséquent, les performances du système de chauffage sont également maximisées afin de réchauffer rapidement l'habitacle du véhicule, en particulier lors du démarrage du système mécanique du véhicule.

En outre, lorsque le premier échangeur thermique utilise le liquide de lubrification du circuit secondaire de lubrification, ce circuit secondaire de lubrification peut comporter un système de retour du liquide de lubrification sortant du premier échangeur thermique vers le réservoir. Ce système de retour est muni d'une conduite de retour et d'un dispositif de retour. Ce système de retour est configuré afin que le liquide de lubrification sortant du premier échangeur thermique soit dirigé vers le réservoir par l'intermédiaire du dispositif de retour et de la conduite de retour lorsque le circuit principal de lubrification fonctionne normalement, la pression du liquide de lubrification circulant dans le circuit principal de lubrification étant alors supérieure ou égale à une pression de fonctionnement P1.

Le système de retour peut utiliser un capteur de pression du liquide de lubrification circulant dans le circuit principal de lubrification, le dispositif de retour étant alors une vanne pilotée en fonction de l'information fournie par ce capteur de pression.

Le dispositif de retour est de préférence un clapet de surpression taré pour d'une part permettre un retour vers le réservoir du liquide de lubrification sortant du premier échangeur thermique lorsque le circuit principal de lubrification fonctionne normalement, la pression du liquide de lubrification circulant dans le circuit principal de lubrification étant supérieure ou égale à la pression de fonctionnement P1 et d'autre part arrêter ce retour lorsque la pression dans ce circuit principal de lubrification est inférieure à la pression de fonctionnement P1. Dans ce cas, le système de retour utilise un clapet anti-retour agencé sur le circuit secondaire de lubrification et sur lequel agit la pression du liquide de lubrification circulant dans le circuit principal de lubrification. Ce clapet anti-retour évite ainsi que le circuit secondaire de lubrification alimente les gicleurs tant que la pression du liquide de lubrification circulant dans le circuit principal de lubrification appliquée sur ce clapet anti-retour est supérieure ou égale à la pression de fonctionnement P1. Un clapet de surpression est plus fiable qu'une vanne pilotée en fonction d'une pression fournie par un capteur de pression.

De la sorte, le liquide de lubrification circulant dans ce circuit secondaire de lubrification circule uniquement dans le premier échangeur thermique afin de chauffer le fluide caloporteur du circuit de récupération d'énergie thermique, tant que la pression du liquide de lubrification circulant dans le circuit principal de lubrification est supérieure ou égale à la pression de fonctionnement P1. Le liquide de lubrification circulant dans le circuit secondaire de lubrification ne lubrifie alors pas le système mécanique. La pression du liquide de lubrification circulant dans le circuit principal de lubrification est supérieure ou égale à la pression de fonctionnement P1 dans le cas d'un fonctionnement normal du circuit principal de lubrification.

En cas de dysfonctionnement du circuit principal de lubrification, telle qu'une fuite, la pression du liquide de lubrification circulant dans le circuit principal de lubrification devient rapidement inférieure à la pression de fonctionnement P1. Dès lors, le dispositif de retour empêche le liquide de lubrification de circuler dans la conduite de retour vers le réservoir. Le liquide de lubrification circulant dans le circuit secondaire de lubrification est alors utilisé afin de lubrifier le système mécanique pour pallier le dysfonctionnement du circuit principal de lubrification.

Un dispositif de refroidissement étant généralement agencé uniquement sur le circuit principal de lubrification, un dysfonctionnement du circuit principal de lubrification a pour conséquence une perte du refroidissement du liquide de lubrification par le dispositif de refroidissement et, par suite, une augmentation de la température du liquide de lubrification et de la température du système mécanique. Le système de récupération d'énergie thermique selon l'invention permet avantageusement de pallier partiellement cette perte du refroidissement du liquide de lubrification. En effet, le système de récupération d'énergie thermique selon l'invention permet de maximiser l'échange thermique entre le fluide caloporteur et le liquide de lubrification dans le premier échangeur thermique afin de dissiper une partie de l'énergie thermique dégagée par le système mécanique et transmise au liquide de lubrification.

Dans ce but, le circuit de récupération d'énergie thermique comporte par exemple un dispositif de régulation du débit du fluide caloporteur configuré afin de maximiser le débit du fluide caloporteur dans le circuit de récupération d'énergie thermique et, par suite, dans chaque premier échangeur, de sorte que l'échange thermique soit maximum entre le fluide caloporteur et le liquide de lubrification dans le premier échangeur. Le système de récupération d'énergie thermique selon l'invention permet alors avantageusement de limiter l'échauffement du liquide de lubrification et celui du système mécanique. Ce dispositif de régulation du débit du fluide caloporteur peut être intégré au premier générateur de débit formant par exemple une pompe à débit variable. Ce dispositif de régulation du débit du fluide caloporteur peut également être indépendant du premier générateur de débit et formé par exemple par une vanne modifiant le débit du fluide caloporteur dans le circuit de récupération d'énergie thermique.

Il est également possible afin de maximiser l'échange thermique entre le fluide caloporteur et le liquide de lubrification dans le premier échangeur thermique d'augmenter l'échange thermique se produisant dans un ou plusieurs dispositifs de chauffage entre l'air de l'habitacle et le fluide caloporteur. Cette augmentation peut être obtenue en augmentant par exemple le débit d'air traversant au moins un dispositif de chauffage par exemple par la mise en route ou bien par l'accélération d'un ventilateur associé à chaque dispositif de chauffage. En effet, l'augmentation de ce débit d'air permet d'abaisser la température du fluide caloporteur circulant dans ce dispositif de chauffage et, par suite, dans le circuit de récupération d'énergie thermique et, en conséquence, d'augmenter l'efficacité de l'échange thermique avec le liquide de lubrification dans le premier échangeur thermique.

De plus, un dysfonctionnement d'un dispositif de refroidissement du dispositif de lubrification peut intervenir sans que la pression du liquide de lubrification circulant dans le circuit principal de lubrification soit inférieure à la pression de fonctionnement P1. Le capteur de température du liquide de lubrification du dispositif de lubrification permet la détection d'un tel dysfonctionnement d'un dispositif de refroidissement lorsque la température du liquide de lubrification est supérieure à une température limite T2. Dans ce cas, le dispositif de régulation du débit du fluide caloporteur maximise le débit du fluide caloporteur dans le circuit de récupération d'énergie thermique de sorte à maximiser, comme précédemment, l'échange thermique entre le fluide caloporteur et le liquide de lubrification dans le premier échangeur et à limiter ainsi l'échauffement du liquide de lubrification et celui du système mécanique.

Le système de récupération d'énergie thermique selon l'invention est particulièrement adapté à un aéronef, et plus particulièrement à un aéronef à voilure tournante. Le système mécanique est alors une boîte de transmission principale de puissance de l'aéronef, le réservoir du dispositif de lubrification étant généralement constitué par un carter de la boîte de transmission principale de puissance.

La présente invention a aussi pour objet une architecture de récupération d'énergie thermique d'un dispositif de lubrification d'un système mécanique d'un véhicule pour le chauffage d'un habitacle du véhicule. Cette architecture de récupération d'énergie thermique comporte un système mécanique d'un véhicule, un système de chauffage de l'habitacle du véhicule et un système de récupération d'énergie thermique tel que précédemment décrit. Le système de chauffage comporte notamment un circuit de récupération d'énergie thermique et un dispositif de chauffage dans lequel circule le fluide caloporteur, permettant un échange thermique entre le fluide caloporteur et l'air de l'habitacle.

De la sorte, l'architecture de récupération d'énergie thermique selon l'invention permet de chauffer l'habitacle du véhicule par récupération d'une énergie thermique disponible dégagée par le système mécanique et sans provoquer de pertes de performances de l'installation motrice du véhicule.

L'architecture de récupération d'énergie thermique selon l'invention contribue également à dissiper une partie de cette énergie thermique dégagée par le système mécanique et transmise au liquide de lubrification et de participer ainsi à la régulation thermique du système mécanique.

Le circuit de récupération d'énergie thermique comporte également un dispositif de régulation du débit du fluide caloporteur circulant dans le circuit de récupération d'énergie thermique afin d'adapter le niveau de chauffage de l'habitacle et également de maximiser, si besoin, la dissipation d'une partie de l'énergie thermique dégagée par le système mécanique grâce au circuit de récupération d'énergie thermique.

La présente invention a également pour objet un aéronef comportant un habitacle et une architecture de récupération d'énergie thermique d'un dispositif de lubrification d'un système mécanique telle que précédemment décrite pour le chauffage de l'habitacle.

La présente invention a enfin pour objet un procédé de récupération d'énergie thermique d'un dispositif de lubrification d'un système mécanique d'un véhicule. Ce procédé peut être mis en œuvre par le système et l'architecture de récupération d'énergie thermique précédemment décrits.

Ce procédé comporte les étapes suivantes :
- une première circulation du liquide de lubrification dans au moins un circuit de lubrification afin de lubrifier le système mécanique,
- une deuxième circulation du fluide caloporteur dans le circuit de récupération d'énergie thermique, le fluide caloporteur étant destiné à alimenter un dispositif de chauffage de l'habitacle du véhicule et
- un échange thermique entre le fluide caloporteur et le liquide de lubrification dans un premier échangeur thermique permettant de chauffer le fluide caloporteur.

La première circulation du liquide de lubrification dans au moins un circuit de lubrification peut comporter deux sous-étapes :
- une première circulation principale du liquide de lubrification dans un circuit principal de lubrification et
- une première circulation secondaire du liquide de lubrification dans un circuit secondaire de lubrification.

Dès lors, le premier échangeur thermique utilisant le liquide de lubrification circulant dans le circuit secondaire de lubrification, le procédé peut comporter une étape complémentaire de circulation de retour du liquide de lubrification vers un réservoir en aval du premier échangeur thermique lorsque la pression du liquide de lubrification circulant dans le circuit principal de lubrification est supérieure ou égale à une pression de fonctionnement P1.

Le procédé peut aussi comporter une étape complémentaire de maximisation du débit du fluide caloporteur dans le premier échangeur thermique lorsque la température du liquide de lubrification est supérieure à une température limite T2 ou bien lorsque la pression du liquide de lubrification circulant dans le circuit principal de lubrification est inférieure à une pression de fonctionnement P1 de sorte que l'échange thermique soit maximum entre le fluide caloporteur et le liquide de lubrification dans chaque premier échangeur thermique afin de limiter un échauffement du liquide de lubrification.

Enfin, le procédé peut comporter deux étapes complémentaires suivantes :
- une dérivation du liquide de lubrification permettant que le liquide de lubrification ne circule pas dans un dispositif de refroidissement du dispositif de lubrification lorsque que la température du liquide de lubrification est inférieure à une température de fonctionnement T1 afin que le fluide caloporteur s'échauffe rapidement par échange thermique avec le liquide de lubrification et
- une circulation complémentaire du liquide de lubrification dans le dispositif de refroidissement afin de refroidir le liquide de lubrification lorsque que la température du liquide de lubrification est supérieure ou égale à la température de fonctionnement T1.

L'invention et ses avantages apparaîtront avec plus de détails dans le cadre de la description qui suit avec des exemples donnés à titre illustratif en référence aux figures annexées qui représentent :
- la figure 1, un aéronef équipé d'une architecture de récupération d'énergie thermique selon l'invention,
- les figures 2 et 6, deux exemples de réalisation de cette architecture de récupération d'énergie thermique, et
- les figures 7 à 8, deux schémas synoptiques de procédés de récupération d'énergie thermique.

Les éléments présents dans plusieurs figures distinctes sont affectés d'une seule et même référence.

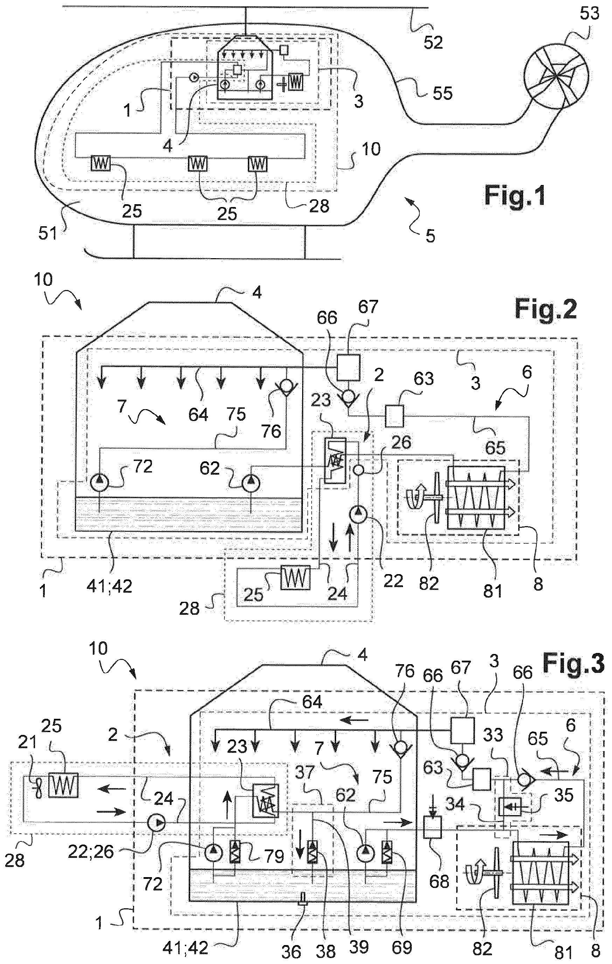

La figure 1 représente un aéronef 5 à voilure tournante comportant notamment un fuselage 55, un habitacle 51, un rotor principal 52 assurant la sustentation, voire la propulsion, de l'aéronef 5 et un rotor arrière 53. Cet aéronef 5 comporte également une boîte de transmission principale de puissance 4 entraînant en rotation le rotor principal 52 et le rotor arrière 53.

Cette boîte de transmission principale de puissance 4 permet la transmission d'une puissance mécanique fournie par une installation motrice (non représenté) de l'aéronef 5 vers le rotor principal 52 et le rotor arrière 53. Cette boîte de transmission principale de puissance 4 est un système mécanique comportant des éléments tournants ainsi que des éléments de transmission de puissance et de réduction ou d'augmentation de vitesse. Cette boîte de transmission principale de puissance 4 sera désignée par la suite « système mécanique ».

Un dispositif de lubrification 3 assure la lubrification du système mécanique 4 et plus précisément de ses éléments tournants et de ses éléments de transmission de puissance et de réduction ou d'augmentation de vitesse.

L'aéronef 5 comporte également un système de récupération d'énergie thermique 1 du dispositif de lubrification 3 du système mécanique 4 de l'aéronef 5 ainsi qu'une architecture de récupération d'énergie thermique 10 du dispositif de lubrification 3 pour le chauffage de l'habitacle 51 de l'aéronef 5. Deux exemples de réalisation de systèmes 1 et d'architectures 10 de récupération d'énergie thermique du dispositif de lubrification 3 sont représentés en détail sur les figures 2 à 6.

L'aéronef 5 comporte aussi un système de chauffage 28 de l'habitacle 51 de l'aéronef 5. Ce système de chauffage 28 comporte un circuit de récupération d'énergie thermique 2 et trois dispositifs de chauffage 25. Un fluide caloporteur circule dans le circuit de récupération d'énergie thermique 2 jusqu'aux dispositifs de chauffage 25. Ces dispositifs de chauffage 25 sont des échangeurs thermiques entre le fluide caloporteur et l'air de l'habitacle 51 permettant le chauffage de cet air de l'habitacle 51. Par souci de simplification, un seul dispositif de chauffage 25 est représenté sur les figures 2 à 6.

De façon commune aux deux exemples de réalisation, le système de récupération d'énergie thermique 1 du dispositif de lubrification 3 du système mécanique 4 de l'aéronef 5 comporte le dispositif de lubrification 3 destiné à une lubrification du système mécanique 4 et le circuit de récupération d'énergie thermique 2.

Le dispositif de lubrification 3 est muni de deux circuits de lubrification 6,7, à savoir un circuit principal de lubrification 6 et un circuit secondaire de lubrification 7, d'un réservoir 42 contenant un liquide de lubrification et d'un capteur de température 36 positionné dans le réservoir 42. Le réservoir 42 du dispositif de lubrification 3 est formé par un carter 41 du système mécanique 4.

Le circuit de récupération d'énergie thermique 2 est muni d'un premier générateur de débit 22, généralement une pompe, d'un premier échangeur thermique 23 relié à un des deux circuits de lubrification 6,7 et de conduites 24 dans lesquelles circule le fluide caloporteur et destinées à acheminer le fluide caloporteur vers chaque dispositif de chauffage 25. Le premier échangeur thermique 23 permet un échange thermique entre le fluide caloporteur et le liquide de lubrification circulant dans le dispositif de lubrification 3 afin de chauffer le liquide caloporteur et, ensuite, de chauffer l'habitacle 51 de l'aéronef 5.

Le circuit principal de lubrification 6 comporte un deuxième générateur de débit 62, un dispositif de refroidissement 8 du liquide de lubrification, un filtre 67, des gicleurs 64, un capteur de pression 63 et des conduites principales 65. Le deuxième générateur de débit 62, généralement une pompe, permet de puiser le liquide de lubrification dans le réservoir 42 et les conduites principales 65 l'acheminent, via le dispositif de refroidissement 8 et le filtre 67, jusqu'aux gicleurs 64 afin que le liquide de lubrification soit pulvérisé sur les éléments tournants et les éléments de transmission de puissance du système mécanique 4.

Le capteur de pression 63 permet de mesurer la pression du liquide de lubrification circulant dans le circuit principal de lubrification 6. Le dispositif de refroidissement 8 permet de refroidir le liquide de lubrification avant qu'il atteigne les gicleurs 64, permettant ainsi la régulation thermique du système mécanique 4.

Le dispositif de refroidissement 8 du liquide de lubrification comporte un deuxième échangeur thermique 81 entre le liquide de lubrification et l'air ambiant ainsi qu'un dispositif de ventilation 82 permettant d'activer une circulation de l'air ambiant balayant ce deuxième échangeur thermique 81. Le premier échangeur thermique 23 est positionné à l'extérieur du système mécanique 4.

Le circuit secondaire de lubrification 7 comporte un troisième générateur de débit 72 et des conduites secondaire 75. Ce troisième générateur de débit 72, généralement une pompe, permet de puiser le liquide de lubrification dans le réservoir 42 et les conduites secondaire 75 l'acheminent jusqu'aux gicleurs 64 du circuit principal de lubrification 6 afin que le liquide de lubrification soit pulvérisé sur les éléments tournants et les éléments de transmission de puissance du système mécanique 4.

Les gicleurs 64 sont communs aux deux circuits de lubrification 6,7. Toutefois, chaque circuit de lubrification 6,7 peut comporter ses propres gicleurs.

Le circuit secondaire de lubrification 7 est un circuit de lubrification de secours destiné à alimenter en liquide de lubrification les gicleurs 64 en cas de dysfonctionnement du circuit principal de lubrification 6.

Chaque circuit de lubrification 6,7comporte également ces clapets anti-retour 66,76 évitant principalement une circulation du liquide de lubrification entre le circuit principal de lubrification 6 et le circuit secondaire de lubrification 7.

Le fluide caloporteur est par exemple de l'eau, de l'alcool ou bien un mélange d'eau et d'alcool ou encore un mélange d'eau et de fluide antigel alors que le liquide de lubrification est de l'huile.

Pour ces deux exemples de réalisation, l'architecture de récupération d'énergie thermique 10 du dispositif de lubrification 3 est formée par le système mécanique 4, le système de chauffage 28 et le système de récupération d'énergie thermique 1. Le système de chauffage 28 comporte le circuit de récupération d'énergie thermique 2 du système de récupération d'énergie thermique 1 et un dispositif de chauffage 25 dans lequel circule le fluide caloporteur permettant un échange thermique entre le fluide caloporteur et l'air de l'habitacle 51.

Selon un premier exemple de réalisation représenté sur la figure 2, le premier échangeur thermique 23 est agencé à l'extérieur du système mécanique 4 et utilise le liquide de lubrification circulant dans le circuit principal de lubrification 6. Le premier échangeur thermique 23 est agencé en amont du dispositif de refroidissement 8. De plus, le circuit de récupération d'énergie thermique 2 comporte un dispositif de régulation 26 distinct du premier générateur de débit 22 permettant de modifier et de réguler le débit de fluide caloporteur circulant dans ce circuit de récupération d'énergie thermique 2, et en particulier dans le premier échangeur thermique 23.

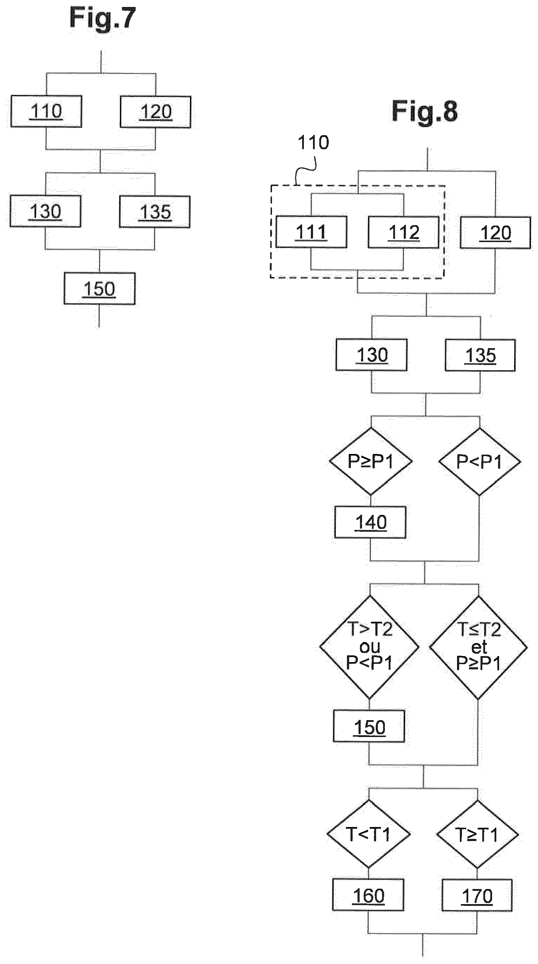

Ce premier exemple de réalisation d'un dispositif de récupération d'énergie thermique 1 met en œuvre un premier procédé de récupération d'énergie thermique dont un schéma synoptique est représenté sur la figure 7. Ce procédé comporte les étapes suivantes :
- une première circulation 110 du liquide de lubrification dans un circuit de lubrification 6,7 afin de lubrifier le système mécanique 4,
- une deuxième circulation 120 du fluide caloporteur dans le circuit de récupération d'énergie thermique 2, le fluide caloporteur étant destiné à alimenter un dispositif de chauffage 25 de l'habitacle 51 de l'aéronef 5 et
- un échange thermique 130 entre le fluide caloporteur et le liquide de lubrification dans un premier échangeur thermique 23 permettant de chauffer le fluide caloporteur.

La première circulation 110 du liquide de lubrification a lieu dans le circuit principal de lubrification 6. La deuxième circulation 120 du fluide caloporteur dans le circuit de récupération d'énergie thermique 2 permet la circulation du fluide caloporteur dans le premier échangeur thermique 23 et d'alimenter également chaque dispositif de chauffage 25 de l'habitacle 51 de l'aéronef 5. La première circulation 110 du liquide de lubrification et la deuxième circulation 120 du fluide caloporteur ont lieu simultanément.

L'échange thermique 130 utilise le liquide de lubrification du circuit principal de lubrification 6 circulant dans le premier échangeur thermique 23 pour chauffer le fluide caloporteur. Le liquide de lubrification traverse ainsi le premier échangeur thermique 23 avant de circuler dans le dispositif de refroidissement 8 ce qui permet un échange thermique 130 optimal entre le liquide de lubrification et le fluide caloporteur afin de chauffer au mieux le liquide caloporteur. La première circulation principale 111 du liquide de lubrification dans le circuit principal de lubrification 6 permet d'acheminer le liquide de lubrification jusqu'aux gicleurs 64 après avoir traversé le premier échangeur thermique 23 et le dispositif de refroidissement 8 afin de réaliser une lubrification 135 du système mécanique 4. L'échange thermique 130 et la lubrification 135 du système mécanique 4 ont lieu simultanément.

Selon un deuxième exemple de réalisation représenté sur les figures 3 à 6, le premier échangeur thermique 23 est agencé à l'intérieur du système mécanique 4, au niveau du circuit secondaire de lubrification 7. Le circuit secondaire de lubrification 7 selon ce deuxième exemple de réalisation comporte un système de retour 37 du liquide de lubrification vers le réservoir 42. Ce système de retour 37 est muni d'un dispositif de retour 38 et d'une conduite de retour 39. Le premier échangeur thermique 23 est agencé en aval du troisième générateur de débit 72 et en amont du système de retour 37. Le dispositif de retour 38 représenté sur les figures 3 à 6 est un clapet de surpression. Ce clapet de surpression 38 est taré et permet à l'aide du clapet anti-retour 76 un retour au réservoir 42 du liquide de lubrification sortant du premier échangeur thermique 23 tant que le circuit principal de lubrification 6 est fonctionnel, la pression du liquide de lubrification circulant dans ce circuit principal de lubrification 6 est supérieure ou égale à une pression de fonctionnement P1.

Dès que la pression du liquide de lubrification circulant dans ce circuit principal de lubrification 6 devient inférieure à une pression de fonctionnement P1, le clapet de surpression 38 et le clapet anti-retour 76 permet d'arrêter ce retour au réservoir 42 du liquide de lubrification sortant du premier échangeur thermique 23 et d'alimenter les gicleurs avec le liquide de lubrification circulant dans le circuit secondaire de lubrification 7.

Le circuit de récupération d'énergie thermique 2 comporte, comme pour le premier exemple de réalisation, un dispositif de régulation 26 qui est cette fois intégré au premier générateur de débit 22. Le premier générateur de débit 22 et le dispositif de régulation 26 forment par exemple une pompe à débit variable permettant de modifier et de réguler le débit de fluide caloporteur circulant dans le circuit de récupération d'énergie thermique 2, et en particulier dans le premier échangeur thermique 23.

De plus, chaque circuit de lubrification 6,7 comporte un dispositif de refoulement 69,79 agencé parallèlement à chaque générateur de débit 62,72. Chaque dispositif de refoulement 69,79 est par exemple un clapet de surpression permettant un retour du liquide de lubrification dans le réservoir 42 en cas de surpression dans un circuit de lubrification 6,7.

Le système de chauffage 28 comporte également un dispositif de ventilation complémentaire 21 agencé à proximité d'un dispositif de chauffage 25 et permettant de modifier le débit d'air traversant ce dispositif de chauffage 25.

Dès lors, ce deuxième exemple de réalisation d'un dispositif de récupération d'énergie thermique 1 met en œuvre un second procédé de récupération d'énergie thermique dont un schéma synoptique est représenté sur la figure 8. Ce second procédé reprend les trois premières étapes du premier procédé de récupération d'énergie thermique, la première circulation 110 du liquide de lubrification comportant deux sous-étapes, une première circulation principale 111 du liquide de lubrification dans le circuit principal de lubrification 6 et une première circulation secondaire 112 du liquide de lubrification dans le circuit secondaire de lubrification 7.

La première circulation principale 111 du liquide de lubrification dans le circuit principal de lubrification 6 permet d'acheminer le liquide de lubrification jusqu'aux gicleurs 64 afin de lubrifier le système mécanique 4. La première circulation secondaire 112 du liquide de lubrification dans le circuit secondaire de lubrification 7 permet la circulation du liquide de lubrification dans le premier échangeur thermique 23 et la réalisation de l'échange thermique 130 afin de chauffer le fluide caloporteur. Ce second procédé comporte une étape complémentaire de circulation de retour 140 du liquide de lubrification sortant du premier échangeur thermique 23 vers le réservoir 42 lorsque le circuit principal de lubrification 6 fonctionne normalement, le dispositif de refroidissement 8 refroidissant notamment le liquide de lubrification, comme représenté sur la figure 3.

En effet, le système de retour 37 est configuré de sorte que le liquide de lubrification sortant du premier échangeur thermique 23 soit dirigé vers le réservoir 42 par l'intermédiaire du dispositif de retour 38 afin de ne pas alimenter les gicleurs 64 lorsque ces gicleurs 64 sont déjà alimentés par le circuit principal de lubrification 6. Le capteur de pression 63 mesure et contrôle la pression du liquide de lubrification circulant dans le circuit principal de lubrification 6 afin de piloter l'ouverture du dispositif de retour 38 lorsque cette pression du liquide de lubrification circulant dans le circuit principal de lubrification 6 est supérieure ou égale à la pression de fonctionnement P1.

De plus, une baisse de cette pression du liquide de lubrification circulant dans le circuit principal de lubrification 6 à une valeur inférieure à la pression de fonctionnement P1 signifie un dysfonctionnement du circuit principal de lubrification 6 et un risque de mauvaise lubrification du système mécanique 4. Dès lors, dès que la pression du liquide de lubrification circulant dans le circuit principal de lubrification 6 est inférieure à la pression de fonctionnement P1, le dispositif de retour 38 est fermé, interdisant la circulation du liquide de lubrification dans la conduite de retour 37, et le liquide de lubrification étant alors acheminé jusqu'aux gicleurs 64 afin de lubrifier le système mécanique 4.

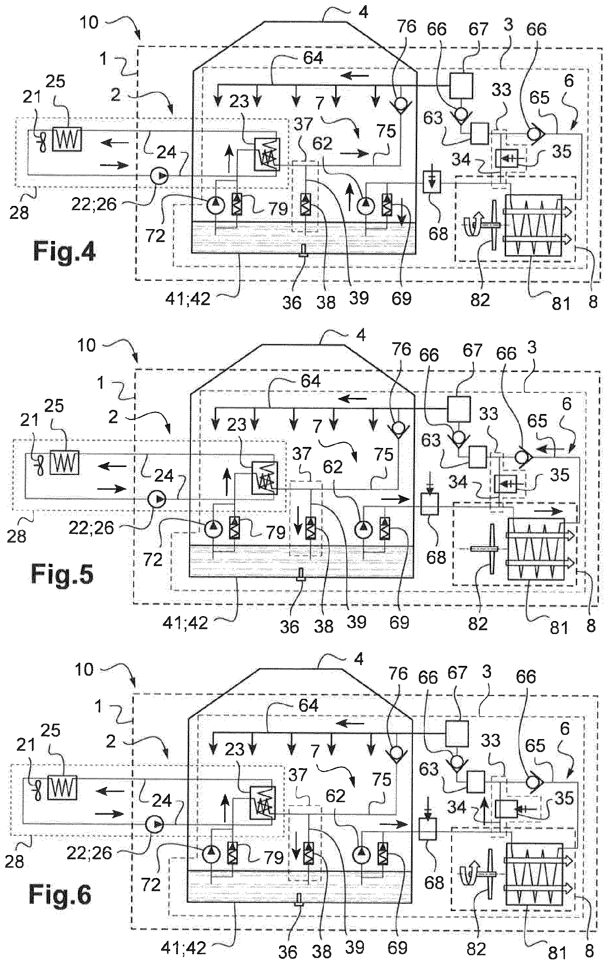

De plus, suite à cette détection d'un dysfonctionnement du circuit principal de lubrification 6, la circulation du liquide de lubrification dans le circuit principal de lubrification 6 est automatiquement coupée. Cette configuration de fonctionnement est représentée sur la figure 4. Dans ce but, le circuit principal de lubrification 6 comporte un dispositif de coupure 68 agencé en amont du dispositif de refroidissement 8 permettant de couper la circulation du liquide de lubrification dans le circuit principal de lubrification 6, le dispositif de refoulement 69 renvoyant alors le liquide de lubrification dans le réservoir 42. Le deuxième générateur de débit 62 peut également être arrêté.

Suite à cette coupure de la circulation du liquide de lubrification dans le circuit principal de lubrification 6, le liquide de lubrification n'est plus refroidi dans le dispositif de refroidissement 8. En conséquence, le système mécanique 4 n'est plus régulé et son fonctionnement peut se dégrader rapidement. Le premier et le second procédés comportent avantageusement une étape complémentaire de maximisation 150 de l'échange thermique entre le fluide caloporteur et le liquide de lubrification dans le premier échangeur thermique 23.

Cette étape complémentaire de maximisation 150 de l'échange thermique entre le fluide caloporteur et le liquide de lubrification dans le premier échangeur thermique 23 peut être réalisée en maximisant le débit du fluide caloporteur dans le premier échangeur thermique 23 par l'intermédiaire du dispositif de régulation 26 afin de refroidir au maximum le liquide de lubrification lors de l'échange thermique 130 avec le fluide caloporteur.

Dès lors, lorsque la pression du liquide de lubrification circulant dans le circuit principal de lubrification 6, mesurée par le capteur de pression 63, est inférieure à la pression de fonctionnement P1, le dispositif de régulation 26 permet la circulation d'un débit maximum du fluide caloporteur dans le circuit de récupération d'énergie thermique 2 et en particulier dans le premier échangeur thermique 23 de sorte que l'échange thermique 130 soit maximum entre le fluide caloporteur et le liquide de lubrification afin de limiter l'échauffement du liquide de lubrification et permettre une régulation thermique du système mécanique 4.

Cette étape complémentaire de maximisation 150 peut également être réalisée par l'intermédiaire du dispositif de ventilation complémentaire 21 qui permet de modifier et donc d'augmenter l'échange thermique dans le dispositif de chauffage 25 entre l'air de l'habitacle 51 et le fluide caloporteur. Dès lors, l'augmentation de ce débit d'air permet d'abaisser la température du fluide caloporteur circulant dans ce dispositif de chauffage 25 et, en conséquence, circulant, dans le circuit de récupération d'énergie thermique 2. L'écart de température entre le fluide caloporteur et le liquide de lubrification circulant dans le premier échangeur thermique 23 est ainsi augmenté et, par suite, l'échange thermique entre le fluide caloporteur et le liquide de lubrification dans le premier échangeur thermique 23 est également augmenté permettant avantageusement de refroidir plus efficacement le liquide de lubrification.

Par ailleurs, un dysfonctionnement du dispositif de refroidissement 8 peut se produire indépendamment de la pression du liquide de lubrification dans le circuit principal de lubrification 6, par exemple suite à un arrêt d'un dispositif de ventilation 82 du dispositif de refroidissement 8, comme représenté sur la figure 5. Dès lors, la lubrification 135 du système mécanique 4 va bien avoir lieu, mais avec un liquide de lubrification non refroidi de manière efficace dans le dispositif de refroidissement 8. De fait, lorsque la température du liquide de lubrification mesurée par le capteur de température 36 dans le réservoir 42 est supérieure à une température limite T2. le dispositif de régulation 26 permet également la maximisation 150 du débit du fluide caloporteur dans le premier échangeur thermique 23 afin de refroidir au maximum le liquide de lubrification lors de l'échange thermique 130 avec le fluide caloporteur et permettre ainsi une régulation thermique du système mécanique 4.

Selon ce deuxième exemple de réalisation, le dispositif de lubrification 3 comporte également un système de dérivation 33 du dispositif de refroidissement 8 agencé sur le circuit principal 6. Ce système de dérivation 33 est muni d'un dispositif de dérivation 35 et d'une conduite de dérivation 34. Le dispositif de dérivation 35 est une vanne pilotée par la température du liquide de lubrification situé dans ce réservoir 42. Le système de dérivation 33 permet un échauffement rapide du liquide de lubrification afin de diminuer le temps de chauffage du fluide caloporteur au démarrage du système mécanique 4.

En effet, si le système de chauffage 28 est mis en route en même temps que le système mécanique 4, la température du liquide de lubrification ne va pas augmenter rapidement car le liquide de lubrification est refroidi en traversant le dispositif de refroidissement 8.

Dès lors, afin de permettre un échauffement plus rapide du liquide de lubrification, le second procédé comporte une étape complémentaire de dérivation 160 du liquide de lubrification permettant que le liquide de lubrification ne circule pas dans le dispositif de refroidissement 8 lorsque que la température du liquide de lubrification est inférieure à la température de fonctionnement T1. Le liquide de lubrification circule alors par la conduite de dérivation 34 en direction des gicleurs 64, le dispositif de dérivation 35 étant ouvert, comme représenté sur la figure 6. Cette dérivation 160 du liquide de lubrification se produit essentiellement au démarrage du système mécanique 4.

Ensuite, lorsque que la température du liquide de lubrification est supérieure ou égale à la température de fonctionnement T1, le dispositif de dérivation 35 est fermé, interdisant la circulation du liquide de lubrification dans la conduite de dérivation 34 en direction des gicleurs 64 comme représenté sur la figure 3. Une circulation complémentaire 170 du liquide de lubrification dans le dispositif de refroidissement 8 du dispositif de lubrification 3 est réalisée permettant ainsi de refroidir le liquide de lubrification.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Système de récupération d'énergie thermique (1) d'un dispositif de lubrification (3) d'un système mécanique (4) d'un véhicule (5), ledit système de récupération d'énergie thermique (1) comporte un dispositif de lubrification (3) muni d'au moins un réservoir (42) contenant un liquide de lubrification et d'au moins un circuit de lubrification (6,7) dans lequel circule ledit liquide de lubrification et destiné à une lubrification dudit système mécanique (4) dudit véhicule (5),
ledit système de récupération d'énergie thermique (1) comportant un circuit de récupération d'énergie thermique (2) dans lequel circule un fluide caloporteur, ledit circuit de récupération d'énergie thermique (2) étant muni :
- d'un premier générateur de débit (22) dudit fluide caloporteur,
- d'au moins un premier échangeur thermique (23) relié à un desdits circuits de lubrification (6,7) et permettant un échange thermique entre ledit fluide caloporteur et ledit liquide de lubrification circulant dans ledit dispositif de lubrification (3) et
- des conduites (24) dans lesquelles circule ledit fluide caloporteur,
au moins un circuit de lubrification (6,7) comportant un dispositif de refroidissement (8) destiné à refroidir ledit liquide de lubrification, et
ledit dispositif de lubrification (3) comportant un capteur de température (36) mesurant la température dudit liquide de lubrification et au moins un système de dérivation (33) d'un dispositif de refroidissement (8), chaque système de dérivation (33) étant muni d'un dispositif de dérivation (35) et d'une conduite de dérivation (34), ledit système de dérivation (33) étant configuré afin que ledit liquide de lubrification ne circule pas dans ledit dispositif de refroidissement (8), mais circule dans ladite conduite de dérivation (34) lorsque la température dudit liquide de lubrification est inférieure à une température de fonctionnement (T1),
**caractérisé en ce que** ledit dispositif de lubrification (3) comporte un capteur de pression (63) dudit liquide de lubrification circulant dans ledit circuit principal de lubrification (6) et ledit circuit de récupération d'énergie thermique (2) comporte un dispositif de régulation (26) du débit dudit fluide caloporteur, ledit dispositif de régulation (26) étant configuré afin de maximiser le débit dudit fluide caloporteur circulant dans ledit circuit de récupération d'énergie thermique (2) de sorte que l'échange thermique soit maximum entre ledit fluide caloporteur et ledit liquide de lubrification dans chaque premier échangeur thermique (23) afin de limiter un échauffement dudit liquide de lubrification lorsque la pression dudit liquide de lubrification circulant dans ledit circuit principal de lubrification (6) est inférieure à une pression de fonctionnement (P1).

2. Système de récupération d'énergie thermique (1) selon la revendication 1,
**caractérisé en ce que** ledit dispositif de lubrification (3) comporte au moins deux circuits de lubrification (6,7) dont un circuit principal de lubrification (6) et un circuit secondaire de lubrification (7), ledit circuit principal de lubrification (6) comportant un dispositif de refroidissement (8) destiné à refroidir ledit liquide de lubrification.

3. Système de récupération d'énergie thermique (1) selon la revendication 2,
**caractérisé en ce qu'**un premier échangeur thermique (23) utilise ledit liquide de lubrification circulant dans ledit circuit principal de lubrification (6).

4. Système de récupération d'énergie thermique (1) selon l'une quelconque des revendications 2 à 3,
**caractérisé en ce qu'**un premier échangeur thermique (23) utilise ledit liquide de lubrification circulant dans ledit circuit secondaire de lubrification (7).

5. Système de récupération d'énergie thermique (1) selon la revendication 4,
**caractérisé en ce que** ledit circuit secondaire de lubrification (7) comporte un système de retour (37) dudit liquide de lubrification vers ledit réservoir (42), ledit système de retour (37) étant muni d'un dispositif de retour (38) et d'une conduite de retour (39), ledit système de retour (37) étant configuré de sorte que le liquide de lubrification sortant dudit premier échangeur thermique (23) relié audit circuit secondaire de lubrification (7) est dirigé vers ledit réservoir (42) lorsque la pression dudit liquide de lubrification circulant dans ledit circuit principal de lubrification (6) est supérieure ou égale à une pression de fonctionnement (P1).

6. Système de récupération d'énergie thermique (1) selon l'une quelconque des revendications 1 à 5,
**caractérisé en ce que**, ledit système de récupération d'énergie thermique (1) comporte un capteur de température (36) dudit liquide de lubrification et ledit circuit de récupération d'énergie thermique (2) comporte un dispositif de régulation (26) du débit dudit fluide caloporteur, ledit dispositif de régulation (26) étant configuré afin de maximiser le débit dudit fluide caloporteur circulant dans ledit circuit de récupération d'énergie thermique (2) de sorte que l'échange thermique soit maximum entre ledit fluide caloporteur et ledit liquide de lubrification dans chaque premier échangeur thermique (23) afin de limiter un échauffement dudit liquide de lubrification lorsque ladite température dudit liquide de lubrification est supérieure à une température limite (T2).

7. Système de récupération d'énergie thermique (1) selon l'une quelconque des revendications 1 à 6,
**caractérisé en ce que** ledit système mécanique (4) est une boîte de transmission principale de puissance et ledit véhicule (5) est un aéronef, ledit réservoir (42) étant constitué par un carter (41) de ladite boîte de transmission principale de puissance.

8. Architecture de récupération d'énergie thermique (10) d'un dispositif de lubrification (3) d'un système mécanique (4) d'un véhicule (5) pour le chauffage d'un habitacle (51) dudit véhicule (5), ladite architecture (10) de récupération d'énergie thermique comportant ledit système mécanique (4), un système de chauffage (28) et un système de récupération d'énergie thermique (1),
**caractérisée en ce que** ledit système de récupération d'énergie thermique (1) est selon l'une quelconque des revendications 1 à 7, ledit système de chauffage (28) comportant ledit circuit de récupération d'énergie thermique (2) dudit système de récupération d'énergie thermique (1) et au moins un dispositif de chauffage (25) dans lequel circule ledit fluide caloporteur.

9. Architecture de récupération d'énergie thermique (10) selon la revendication 8,
**caractérisée en ce que**, ledit dispositif de lubrification (3) comportant un capteur de pression (63) dudit liquide de lubrification circulant dans ledit circuit principal de lubrification (6), ledit système de chauffage (28) comporte au moins un dispositif de ventilation complémentaire (21) agencé à proximité d'un dispositif de chauffage (25) et configuré afin de modifier le débit d'air traversant ledit dispositif de chauffage (25) de sorte que l'échange thermique soit augmenté entre ledit air traversant ledit dispositif de chauffage (25) et ledit fluide caloporteur circulant dans ledit dispositif de chauffage (25) afin de limiter un échauffement dudit liquide de lubrification lorsque la pression dudit liquide de lubrification circulant dans ledit circuit principal de lubrification (6) est inférieure à une pression de fonctionnement (P1).

10. Architecture de récupération d'énergie thermique (10) selon l'une quelconque des revendications 8 à 9,
**caractérisée en ce que**, ledit système de récupération d'énergie thermique (1) comportant un capteur de température (36) dudit liquide de lubrification, ledit système de chauffage (28) comporte au moins un dispositif de ventilation complémentaire (21) agencé à proximité d'un dispositif de chauffage (25) et configuré afin de modifier le débit d'air traversant ledit dispositif de chauffage (25) de sorte que l'échange thermique soit augmenté entre ledit air traversant ledit dispositif de chauffage (25) et ledit fluide caloporteur circulant dans ledit dispositif de chauffage (25) afin de limiter un échauffement dudit liquide de lubrification lorsque ladite température dudit liquide de lubrification est supérieure à une température limite (T2).

11. Aéronef (5) comportant un système mécanique (4) et un habitacle (51),
**caractérisé en ce que** ledit aéronef (5) comporte une architecture de récupération d'énergie thermique (10) d'un dispositif de lubrification (3) dudit système mécanique (4) selon l'une quelconque des revendications 8 à 10 pour le chauffage dudit habitacle (51), ledit dispositif de lubrification (3) dudit système de récupération d'énergie thermique (1) réalisant une lubrification dudit système mécanique (4).

## Patentansprüche

1. System zur Rückgewinnung von Wärmeenergie (1) einer Schmiervorrichtung (3) eines mechanischen Systems (4) eines Fahrzeugs (5), wobei das System zur Rückgewinnung von Wärmeenergie (1) eine Schmiervorrichtung (3) mit mindestens einem Behälter (42), der eine Schmierflüssigkeit enthält, und mindestens einem Schmierkreislauf (6, 7), in dem die Schmierflüssigkeit fließt, und der für eine Schmierung des mechanischen Systems (4) des Fahrzeugs (5) vorgesehen ist, umfasst,
wobei das System zur Rückgewinnung von Wärmeenergie (1) einen Wärmeenergierückgewinnungskreislauf (2) umfasst, in dem ein Wärmeübertragungsfluid zirkuliert, wobei der Wärmeenergierückgewinnungskreis (2) aufweist:
- einen ersten Durchflussgenerator (22) für das Wärmeübertragungsfluid,
- mindestens einen ersten Wärmetauscher (23), der mit einem der Schmierkreisläufe (6, 7) verbunden ist und einen Wärmeaustausch zwischen dem Wärmeübertragungsfluid und der in der Schmiervorrichtung (3) zirkulierenden Schmierflüssigkeit ermöglicht,
- Leitungen (24), in denen das Wärmeübertragungsfluid zirkuliert,
wobei mindestens ein Schmierkreislauf (6, 7) eine Kühlvorrichtung (8) zum Kühlen der Schmierflüssigkeit aufweist,
wobei die Schmiervorrichtung (3) einen Temperatursensor (36), der die Temperatur der Schmierflüssigkeit misst, und mindestens ein Nebenschlusssystem (33) einer Kühlvorrichtung (8) umfasst, wobei jedes Nebenschlusssystem (33) mit einer Nebenschlussvorrichtung (35) und einer Nebenschlussleitung (34) versehen ist, wobei das Nebenschlusssystem (33) so konfiguriert ist, dass die Schmierflüssigkeit nicht in der Kühlvorrichtung (8) zirkuliert, sondern in der Nebenschlussleitung (34) zirkuliert, wenn die Temperatur der Schmierflüssigkeit niedriger ist als eine Betriebstemperatur (T1),
**dadurch gekennzeichnet, dass** die Schmiervorrichtung (3) einen Drucksensor (63) für die in dem Hauptschmierkreislauf (6) zirkulierende Schmierflüssigkeit aufweist und der Wärmeenergierückgewinnungskreislauf (2) eine Vorrichtung (26) zum Regeln der Durchflussmenge des Wärmeübertragungsfluids aufweist, wobei die Regelvorrichtung (26) konfiguriert ist, um die Durchflussmenge des in dem Wärmeenergierückgewinnungskreislauf (2) zirkulierenden Wärmeübertragungsfluids so zu maximieren, dass der Wärmeaustausch zwischen dem Wärmeübertragungsfluid und der Schmierflüssigkeit in jedem ersten Wärmetauscher (23) maximal ist, um eine Erwärmung der Schmierflüssigkeit zu begrenzen, wenn der Druck der in dem Hauptschmierkreislauf (6) zirkulierenden Schmierflüssigkeit niedriger ist als ein Betriebsdruck (P1).

2. System zur Rückgewinnung von Wärmeenergie (1) nach Anspruch 1,
**dadurch gekennzeichnet, dass** die Schmiervorrichtung (3) mindestens zwei Schmierkreisläufe (6, 7) umfasst, darunter einen Hauptschmierkreislauf (6) und einen Nebenschmierkreislauf (7), wobei der Hauptschmierkreislauf (6) eine Kühlvorrichtung (8) zum Kühlen der Schmierflüssigkeit umfasst.

3. System zur Rückgewinnung von Wärmeenergie (1) nach Anspruch 2,
**dadurch gekennzeichnet, dass** ein erster Wärmetauscher (23) die Schmierflüssigkeit nutzt, die in dem Hauptschmierkreislauf (6) zirkuliert.

4. System zur Rückgewinnung von Wärmeenergie (1) nach einem der Ansprüche 2 bis 3,
**dadurch gekennzeichnet, dass** ein erster Wärmetauscher (23) die Schmierflüssigkeit nutzt, die in dem Nebenschmierkreislauf (7) zirkuliert.

5. System zur Rückgewinnung von Wärmeenergie (1) nach Anspruch 4,
**dadurch gekennzeichnet, dass** der Nebenschmierkreislauf (7) ein Rückführsystem (37) für die Schmierflüssigkeit zu dem Behälter (42) umfasst, wobei das Rückführsystem (37) eine Rückführvorrichtung (38) und eine Rückführleitung (39) umfasst, wobei das Rückführsystem (37) so konfiguriert ist, dass die Schmierflüssigkeit, die aus dem mit dem Nebenschmierkreislauf (7) verbundenen ersten Wärmetauscher (23) austritt, zu dem Behälter (42) geleitet wird, wenn der Druck der in dem Hauptschmierkreis (6) strömenden Schmierflüssigkeit größer oder gleich einem Betriebsdruck (P1) ist.

6. System zur Rückgewinnung von Wärmeenergie (1) nach einem der Ansprüche 1 bis 5,
**dadurch gekennzeichnet, dass** das System zur Rückgewinnung von Wärmeenergie (1) einen Temperatursensor (36) für die Schmierflüssigkeit aufweist und der Wärmeenergierückgewinnungskreis (2) eine Vorrichtung (26) zum Regeln der Durchflussmenge des Wärmeübertragungsfluids umfasst, und dass die Regelvorrichtung (26) konfiguriert ist, um die Durchflussmenge des Wärmeübertragungsfluids, das in dem Wärmeenergierückgewinnungskreis (2) zirkuliert, so zu maximieren, dass in jedem ersten Wärmetauscher (23) ein maximaler Wärmeaustausch zwischen dem Wärmeübertragungsfluid und der Schmierflüssigkeit stattfindet, um das Erwärmen der Schmierflüssigkeit zu begrenzen, wenn die Temperatur der Schmierflüssigkeit über einer Grenztemperatur (T2) liegt.

7. System zur Rückgewinnung von Wärmeenergie (1) nach einem der Ansprüche 1 bis 6,
**dadurch gekennzeichnet, dass** das mechanische System (4) ein Hauptantriebsgetriebe ist und das Fahrzeug (5) ein Luftfahrzeug ist, wobei der Tank (42) durch ein Gehäuse (41) des Hauptantriebsgetriebes gebildet ist.

8. Architektur zur Rückgewinnung von Wärmeenergie (10) einer Schmiervorrichtung (3) eines mechanischen Systems (4) eines Fahrzeugs (5) zum Beheizen eines Fahrgastraums (51) des Fahrzeugs (5), wobei die Architektur zur Rückgewinnung von Wärmeenergie (10) das mechanische System (4), ein Heizsystem (28) und ein System zur Rückgewinnung von Wärmeenergie (1) umfasst,
**dadurch gekennzeichnet, dass** das System zur Rückgewinnung von Wärmeenergie (1) nach einem der Ansprüche 1 bis 7 ist,
wobei das Heizsystem (28) den Wärmeenergierückgewinnungskreis (2) des Systems zur Rückgewinnung von Wärmeenergie (1) und mindestens eine Heizvorrichtung (25) umfasst, in der das Wärmeübertragungsfluid zirkuliert.

9. Architektur zur Rückgewinnung von Wärmeenergie (10) nach Anspruch 8,
**dadurch gekennzeichnet, dass** die Schmiervorrichtung (3) einen Drucksensor (63) für die in dem Hauptschmierkreislauf (6) zirkulierende Schmierflüssigkeit aufweist,
das Heizsystem (28) mindestens eine komplementäre Belüftungsvorrichtung (21) beinhaltet, die in der Nähe einer Heizvorrichtung (25) angeordnet und konfiguriert ist, um den Luftdurchsatz durch Heizvorrichtung Heizung (25) so zu ändern, dass der Wärmeaustausch zwischen der Luft durch die Heizvorrichtung (25) und dem durch die Heizvorrichtung (25) strömenden Wärmeträgerfluid erhöht wird, um das Erwärmen des Schmiermittels zu begrenzen, wenn der Druck des durch den Hauptschmierkreislauf (6) zirkulierenden Schmiermittels niedriger ist als ein Betriebsdruck (P1).

10. Architektur zur Rückgewinnung von Wärmeenergie (10) nach einem der Ansprüche 8 bis 9,
**dadurch gekennzeichnet, dass** das System zur Rückgewinnung von Wärmeenergie (1) einen Temperatursensor (36) der Schmierflüssigkeit umfasst, das Heizsystem (28) mindestens eine komplementäre Belüftungsvorrichtung (21) umfasst, die in der Nähe einer Heizvorrichtung (25) angeordnet und konfiguriert ist, um den Luftdurchsatz durch die Heizvorrichtung (25) so zu ändern, dass der Wärmeaustausch zwischen der Luft durch die Heizvorrichtung (25) und dem durch die Heizvorrichtung (25) strömenden Wärmeträgerfluid erhöht wird, um eine Erwärmung des Schmiermittels zu begrenzen, wenn die Temperatur des Schmiermittels höher als eine Grenztemperatur (T2) ist.

11. Luftfahrzeug (5) mit einem mechanischen System (4) und einem Fahrgastraum (51),
**dadurch gekennzeichnet, dass** das Luftfahrzeug (5) eine Architektur zur Rückgewinnung von Wärmeenergie (10) einer Schmiervorrichtung (3) des mechanischen Systems (4) nach einem der Ansprüche 8 bis 10 zum Beheizen des Fahrgastraums (51) aufweist, wobei die Schmiervorrichtung (3) des Systems zur Rückgewinnung von Wärmeenergie (1) eine Schmierung des mechanischen Systems (4) bewirkt.

## Claims

1. Thermal energy recovery system (1) of a lubrication device (3) of a mechanical system (4) of a vehicle (5), said thermal energy recovery system (1) comprising a lubrication device (3) provided with at least one reservoir (42) containing a lubricating liquid and at least one lubrication circuit (6, 7) in which said lubricating liquid circulates for lubricating said mechanical system (4) of said vehicle (5),
said thermal energy recovery system (1) comprising a thermal energy recovery circuit (2) in which a heat transfer fluid circulates, said thermal energy recovery circuit (2) being provided with:
- a first flow generator (22) of said heat transfer fluid;
- at least one first heat exchanger (23) connected to one of said lubrication circuits (6, 7) and allowing a heat exchange between said heat transfer fluid and said lubricating liquid circulating in said lubrication device (3); and
- pipes (24) in which said heat transfer fluid circulates,
at least one lubrication circuit (6, 7) having a cooling device (8) for cooling said lubricating liquid, and said lubricating device (3) comprising a temperature sensor (36) measuring the temperature of said lubricating liquid and at least one bypass system (33) of a cooling device (8), each bypass system (33) being provided with a bypass device (35) and a bypass line (34), said bypass system (33) being configured so that said lubricating liquid does not circulate in said cooling device (8), but flows in said bypass line (34) when the temperature of said lubricating liquid is below an operating temperature (T1),
**characterised in that** said lubricating device (3) comprises a pressure sensor (63) for said lubricating liquid circulating in said main lubrication circuit (6) and said thermal energy recovery circuit (2) comprises a regulating device (26) for the flow rate of said heat transfer fluid, said regulating device (26) being configured to maximise the flow rate of said heat transfer fluid circulating in said thermal energy recovery circuit (2) so that the heat exchange is maximised between said heat transfer fluid and said lubricating liquid in each first heat exchanger (23) so as to limit heating of said lubricating liquid when the pressure of said lubricating liquid circulating in said main lubrication circuit (6) is lower than an operating pressure (P1).

2. Thermal energy recovery system (1) according to claim 1, **characterised in that** said lubrication device (3) comprises at least two lubrication circuits (6,7) including a main lubrication circuit (6) and a secondary lubrication circuit (7), said main lubrication circuit (6) comprising a cooling device (8) for cooling said lubricating liquid.

3. Thermal energy recovery system (1) according to claim 2, **characterised in that** a first heat exchanger (23) uses said lubricating liquid circulating in said main lubrication circuit (6).

4. Thermal energy recovery system (1) according to either claim 2 or 3, **characterised in that** a first heat exchanger (23) uses said lubricating liquid circulating in said secondary lubrication circuit (7).

5. Thermal energy recovery system (1) according to claim 4, **characterised in that** said secondary lubrication circuit (7) comprises a return system (37) of said lubricating liquid to said reservoir (42), said return system (37) being provided with a return device (38) and a return line (39), said return system (37) being configured such that lubricating liquid exiting said first heat exchanger (23) connected to said secondary lubrication circuit (7) is directed to said reservoir (42) when the pressure of said lubricating liquid circulating in said main lubrication circuit (6) is greater than or equal to an operating pressure (P1).

6. Thermal energy recovery system (1) according to any one of claims 1 to 5, **characterised in that** said thermal energy recovery system (1) comprises a temperature sensor (36) of said lubricating liquid and said thermal energy recovery circuit (2) comprises a flow control device (26) of said heat transfer fluid, said control device (26) being configured to maximise the flow rate of said heat transfer fluid circulating in said thermal energy recovery circuit (2) so that the heat exchange is maximised between said heat transfer fluid and said lubricating liquid in each first heat exchanger (23) in order to limit a heating of said lubricating liquid when said temperature of said lubricating liquid is greater than a limit temperature (T2).

7. Thermal energy recovery system (1) according to any one of claims 1 to 6, **characterised in that** said mechanical system (4) is a main gearbox and said vehicle (5) is an aircraft, said tank (42) being constituted by a housing (41) of said main gearbox.

8. Architecture for recovering thermal energy (10) from a lubricating device (3) of a mechanical system (4) of a vehicle (5) for heating a passenger compartment (51) of said vehicle (5), said thermal energy recovery architecture (10) comprising said mechanical system (4), a heating system (28) and a thermal energy recovery system (1), **characterised in that** said thermal energy recovery system (1) is according to any one of claims 1 to 7, said heating system (28) comprising said thermal energy recovery circuit (2) of said recovery system of thermal energy (1) and at least one heating device (25) in which said heat transfer fluid circulates.

9. Thermal energy recovery architecture (10) according to claim 8,
**characterised in that** said lubricating device (3) comprises a pressure sensor (63) of said lubricating liquid circulating in said main lubrication circuit (6), said heating system (28) comprising at least one additional ventilation device (21) arranged near a heating device (25) and configured to modify the flow rate of air passing through said heating device (25) so that the heat exchange is increased between said air passing through said heating device (25) and said heat transfer fluid circulating in said heating device (25) in order to limit a heating of said lubricating liquid when the pressure of said lubricating liquid circulating in said main lubrication circuit (6) is below an operating pressure (P1).

10. Thermal energy recovery architecture (10) according to either claim 8 or 9, **characterised in that** said thermal energy recovery system (1) comprises a temperature sensor (36) of said lubricating liquid, said heating system (28) comprising at least one supplementary ventilation device (21) arranged near a heat device (25) and configured to change the airflow through said heating device (25) so that heat exchange is increased between said air passing through said heater (25) and said cooling fluid circulating in said heater (25) to limit heating of said lubricating liquid when said temperature of said lubricating liquid is above a limit temperature (T2).

11. Aircraft (5) comprising a mechanical system (4) and a passenger compartment (51), **characterised in that** said aircraft (5) comprises an architecture for recovering thermal energy (10) from a lubricating device (3) of said mechanical system (4) according to any of claims 8 to 10 for heating said passenger compartment (51), said lubricating device (3) of said thermal energy recovery system (1) lubricating said mechanical system (4).
